# EUROPÄISCHE PATENTSCHRIFT

(11) **EP 1 386 106 B1**
(45) Veröffentlichungstag und Bekanntmachung des Hinweises auf die Patenterteilung: **12.09.2007**
(21) Anmeldenummer: 02718480.3
(22) Anmeldetag: 25.04.2002
(51) Int. Cl.: F16L 17/04, F16B 31/02

(54) **VERBINDUNGSVORRICHTUNG**
CONNECTING DEVICE
DISPOSITIF DE CONNEXION

(30) Priorität: 25.04.2001 CH 761012001
(43) Veröffentlichungstag der Anmeldung: 04.02.2004
(73) Patentinhaber: Straub Werke AG, 7323 Wangs (CH)
(72) Erfinder: HANGARTNER, Hanspeter, CH-8722 Kaltbrunn (CH); HÄBERLI, Hanspeter, CH-8887 Unterterzen (CH)
(74) Vertreter: Rosenich, Paul
(86) Internationale Anmeldenummer: PCT/IB2002/001369
(87) Internationale Veröffentlichungsnummer: WO 2002/086370

(56) Entgegenhaltungen:
- DE-A- 3 926 626
- GB-A- 1 139 175
- US-A- 5 137 305

## Beschreibung

Die Erfindung betrifft eine Vorrichtung zum Erzeugen von Druckkräften auf miteinander zu verbindende Bauteile, mit einem Gehäuse, einer mechanisch betätigbaren Spanneinrichtung, einer im Gehäuse angeordneten, elastischen Masse, welche durch Krafteinwirkung der Spanneinrichtung gegenüber den zu verbindenden Bauteilen unter Druck setzbar ist. Eine derartige Vorrichtung ist z.B. aus der US-A-5 137 305 bzw. EP-A- 0 447 955 bekannt.

Bei Vorrichtungen der genannten Art besteht ein wesentliches Problem darin, die Spannkraft der Spanneinrichtung so zu begrenzen, dass der für die einwandfreie Funktion der Vorrichtung erforderliche Druck in der Masse erreicht, jedoch nicht wesentlich überschritten wird.

Bei bekannten Vorrichtungen wird versucht, dies dadurch zu erreichen, dass die Spannkraft der Spanneinrichtung durch eine Überlastungsvorrichtung eingeschränkt wird. Dies erfolgt einerseits durch Mittel an der Spanneinrichtung selbst oder an den Hilfsmitteln zu deren Betätigung.

Im ersten Fall können dies beispielsweise Nocken, Vorsprünge oder Klebeverbindungen sein, die bei Erreichen eines bestimmten Grenzwertes verformt oder abgeschert werden. Weiterhin sind Verfahren zum elektrischen Messen und Anzeigen von Spannkräften mittels verformbaren Elementen, wie beispielsweise Dehnmesstreifen, Glasfasern oder dgl. bekannt. Diese Lösungen sind jedoch sehr aufwendig, teuer und in der rauhen Betriebspraxis oft nicht einsetzbar.

Im zweiten Fall werden beispielsweise sog. Drehmomentschlüssel eingesetzt, welche eine fix eingestellte oder auf ein vorbestimmtes Drehmoment einstellbare Rutschkupplung aufweisen.

In beiden Fällen wird lediglich die Ursache beim Betätigen der Spanneinrichtung gemessen. In der Übertragungskette zwischen der Ursache, d.h. dem Betätigen der Spanneinrichtung, und der Druckeinwirkung an den zu verbindenden Bauteilen bestehen viele Unsicherheiten, beispielsweise infolge unterschiedlicher Reibungsverhältnisse oder temperaturabhängiger Eigenschaften der Masse. So können z.B. das äussere Einwirken von Druck und Temperatur einen erheblichen Einfluss auf das Kriech- und Relaxationsverhalten elastischer Massen, wie natürlichem oder synthetischem Gummi, zur Folge haben.

Der Erfindung liegt die Aufgabe zugrunde, eine Vorrichtung zu schaffen, welche eine von äusseren Faktoren, bzw. Störgrössen, unabhängige, konstante Druckeinwirkung auf die zu verbindenden Bauteile ermöglicht.

Erfindungsgemäss wird diese Aufgabe dadurch gelöst, dass das Gehäuse oder die Masse einen mechanischen Indikator aufweist, der den Spannungszustand der Masse nach aussen anzeigt.

Im Unterschied zum bekannten Stand der Technik wird somit nicht die Ursache am Ort der Entstehung, sondern deren Auswirkungen im Arbeitsbereich festgestellt. Somit fallen die gesamten Unsicherheiten, wie beispielsweise Reibungsverluste, Einfluss der Elastizität, bzw. (Shore-)-Härte der Masse usw., im dazwischen liegenden Übertragungsbereich vollständig weg.

Eine besonders vorteilhafte Lösung besteht darin, dass die Masse gummielastische Eigenschaften aufweist. Die für eine Abdichtung der Masse erforderlichen Massnahmen können somit auf ein Minimum beschränkt werden. Bei entsprechenden Eigenschaften (z.B. Viskosität) der Masse können daraus auch ein oder mehrere Formteile hergestellt und bei der Montage der Vorrichtung in das Gerät eingesetzt werden.

Für die Erkennung des Druckzustandes der Masse ist es zweckmässig, dass das Gehäuse wenigstens eine definierte Durchtrittsöffnung für die Masse aufweist. Je nach Zähigkeit, bzw. (Shore-)-Härte der Masse kann diese Durchtrittsöffnung im Querschnitt kleiner oder grösser dimensioniert werden.

Vorteilhaft ist im Bereich der Durchtrittsöffnung ein bewegliches Anzeigeelement vorgesehen. Dieses verhindert ein Austreten der Masse aus dem Gehäuse sowie den direkten Kontakt der Masse mit der Umgebung. Zur besseren Sichtbarkeit kann das Anzeigeelement mit einer auffallenden Farbgebung versehen sein.

Das Anzeigeelement ist zweckmässig als im wesentlichen konvexes, ggf. stiftförmiges, axial verschiebbares, bei Erreichen des vorgegebenen Spannungszustandes vorzugsweise über die Mantelfläche des Gehäuses hervortretendes Element ausgebildet. Durch entsprechende Anschläge wie beispielsweise Nocken, Schultern oder dgl. kann sichergestellt werden, dass sich das Anzeigeelement nicht von der Vorrichtung entfernt.

Eine weitere vorteilhafte Ausführung besteht darin, dass das Anzeigeelement als springende Federmembran mit zwei definierten Endzuständen ausgebildet ist. Die Funktionsweise ist dabei ähnlich einem als sog. "Frosch" bekannten Spielzeug, bei dem durch das Wechseln vom einen in den anderen Endzustand ein klick-klack-artiger Laut erzeugt wird.

Das Anzeigeelement ist zweckmässigerweise etwa tellerförmig ausgebildet. Unter tellerförmig ist zu verstehen, dass dieser im Querschnitt beispielsweise kegelförmig, konvex, bzw. konkav gewölbt ist oder die Form eines Parabolspiegels aufweist. Für eine gleichmässige Spannungsverteilung und eine einfach herstellbare Durchtrittsöffnung im Gehäuse weist das Anzeigeelement vorzugsweise eine kreisförmige Kontur auf.

Eine vorteilhafte Ausführung besteht darin, dass das Anzeigeelement als Tellerfeder ausgebildet ist. Tellerfedern sind handelsübliche und deshalb besonders wirtschaftliche Elemente, die auch in Kombinationen verwendet werden können.

Bei einer weiteren zweckmässigen Ausbildung ist das Anzeigeelement als flache Messscheibe ausgebildet. Solche Messscheiben sind teilweise ebenfalls im Handel als Fertigteile erhältlich.

Das Anzeigeelement gemäss einer Variante ist vorteilhaft als federnder Finger oder Steg ausgebildet. Federnde Finger oder Stege sind von aussen ohne weiteres erkennbar. Bei einem als Finger ausgebildeten Anzeigeelement ist über die Hebelwirkung eine Vergrösserung des Anzeigeweges möglich.

Ein als federnder Finger ausgebildetes Anzeigeelement kann auf unterschiedliche Weise, beispielsweise über ein Gelenk, mit dem Gehäuse verbunden werden. Besonders zweckmässig ist der Finger über einen elastischen Steg mit dem Gehäuse verbunden und von der Masse beaufschlagt. Durch die Dimensionierung des Steges können die federnden Eigenschaften des Anzeigeelementes verändert und angepasst werden.

Vorteilhaft ist der Finger oder Steg mit dem Gehäuse einstückig verbunden und wird von der Masse beaufschlagt. Der Finger oder Steg kann somit gleichzeitig bei der Herstellung des Gehäuses, beispielsweise durch einen Stanzvorgang, erzeugt werden.

Um ein Herausdrücken der Masse durch die Öffnungen im Gehäuse zu verhindern, ist das Anzeigeelement an seiner gegen die Masse gerichteten Seite vorteilhaft durch eine Schutzfolie abgedeckt.

Für eine wirtschaftliche Herstellung in grösseren Serien ist es zweckmässig, das Anzeigeelement als separate, auswechselbare Baueinheit auszubilden.

Die erfindungsgemässe Einrichtung kann an unterschiedlichen Vorrichtungen mit entsprechender Aufgabenstellung, d.h. Aufbringen einer äusseren Kraft, bzw. eines Drehmomentes und damit Erzielen einer definierten Wirkung am Ende einer Übertragungskette von Einflüssen, eingesetzt werden. Besonders zweckmässig ist die Vorrichtung als Rohrkupplung zum Verbinden glattendiger Rohre ausgebildet. Rohrkupplungen weisen in der Regel eine Gummimanschette auf, welche durch Verspannen des Gehäuses gegen die Rohroberfläche gepresst wird. Die Abdichtung entsteht dabei vorzugsweise durch elastische Dichtlippen der Gummimanschette.

Die Spanneinrichtung besteht vorzugsweise aus zwei achsparallel angeordneten Verschlussbolzen und wenigstens einer diese quer dazu durchsetzenden Spannschraube.

Die Erfindung wird nachstehend, anhand der sie beispielsweise darstellenden Ausführungsformen, näher erläutert. Es zeigen:
- Fig. 1: eine erfindungsgemässe, als Rohrkupplung ausgebildete Vorrichtung,
- Fig. 2: eine stirnseitige Ansicht der in Fig. 1 dargestellten Rohrkupplung,
- Fig. 3: einen Ausschnitt der in Fig. 2 dargestellten Rohrkupplung im eingekreisten Bereich A, im entspannten Zustand,
- Fig. 4: einen Ausschnitt gemäss Fig. 3, im verspannten Zustand,
- Fig. 5: eine Variante der in Fig. 3 und 4 dargestellten Lösung,
- Fig. 6: eine weitere Ausführungsform einer erfindungsgemässen Rohrkupplung, in perspektivischer Darstellung,
- Fig.7: eine Variante der in Fig. 6 dargestellten Anzeigeelemente,
- Fig. 8: eine weitere Ausführung der in Fig. 6 dargestellten Anzeigeelemente,
- Fig. 9: ein weiteres erfindungsgemässes Anzeigeelement
- Fig. 10: einen Querschnitt durch das in Fig. 9 dargestellte Anzeigeelement, entlang der Linie X - X,
- Fig. 11: eine Variante des in Fig. 9 und 10 dargestellten Anzeigeelementes,
- Fig. 12: ein Anzeigeelement mit einer Tellerfeder als Messeinheit,
- Fig. 13: eine als separates, mit einem Gehäuse verbindbares Bauteil ausgebildetes Anzeigeelement, und
- Fig. 14: eine Variante des in Fig. 13 dargestellten Anzeigeelementes.

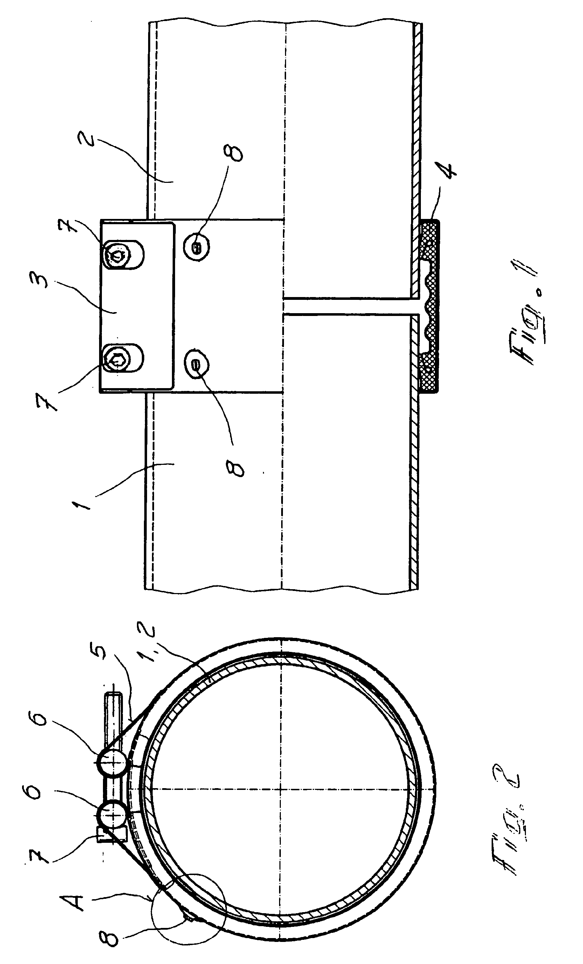

Die aus Fig. 1 und 2 ersichtliche, an sich bekannte Rohrkupplung dient zum Verbinden und Abdichten zweier glattendiger Rohre 1 und 2. Dazu ist in einem Gehäuse 3 eine Dichtmanschette 4 aus einer elastischen Masse, vorzugsweise aus synthetischem Gummi, angeordnet. In den als Laschen 5 ausgebildeten Enden des Gehäuses 3 stecken zwei Verschlussbolzen 6. Diese bilden, zusammen mit den die Verschlussbolzen 6 quer durchsetzenden Spannschrauben 7, den sogenannten Verschluss der Rohrkupplung. Durch das Anziehen der Spannschrauben 7 wird die Rohrkupplung verspannt und die Dichtmanschette 4 dabei gegen die Oberfläche der Rohre 1, 2 gepresst. Für die einwandfreie Funktion der Rohrkupplung ist dabei ein bestimmter Anpressdruck notwendig. Beim bekannten Stand der Technik werden die Spannschrauben daher mittels eines Drehmomentschlüssels angezogen. Beispielsweise durch Unregelmässigkeiten infolge unterschiedlicher Reibungsverhältnisse an den Spannschrauben 7 können dabei grosse Abweichungen vom Sollzustand entstehen.

Erfindungsgemäss ist am Gehäuse 3 ein Anzeigeelement 8 angeordnet. Dieses ist in den Fig. 3 und 4 in vergrössertem Massstab dargestellt. Das Anzeigeelement 8 ist etwa tellerförmig ausgebildet und weist einen verformbaren Rand 9 auf. Dieser Rand 9 kann vom in Fig. 3 dargestellten einen Endzustand in den in Fig. 4 dargestellten anderen Endzustand springen. Das Gehäuse 3 weist im Bereich A des Anzeigeelementes 8 Durchtrittsöffnungen 10 für das Anzeigeelement 8 auf.

Bei dem in Fig. 3 dargestellten, entspannten Zustand der Rohrkupplung, bzw. der Dichtmanschette 4, ist das Anzeigeelement 8 nach innen gewölbt und gegenüber der äusseren Mantelfläche des Gehäuses vorzugsweise bündig oder zurückstehend.

Bei dem in Fig. 4 dargestellten, verspannten Zustand der Rohrkupplung ist das Anzeigeelement 8 nach aussen gewölbt und überragt die äussere Mantelfläche des Gehäuses 3. Somit ist der Verspannungs-Zustand der Rohrkupplung von aussen und ohne jegliche Hilfsmittel jederzeit erkennbar.

Bei der aus Fig. 5 ersichtlichen Variante der erfindungsgemässen Lösung ist das Anzeigeelement als Federmembran 11 ausgebildet, welche mit einem Stift 12 verbunden, beispielsweise verschweisst oder vernietet ist. Bei dem strichpunktiert dargestellten verspannten Zustand der Rohrkupplung überragt der Stift 12 die Oberfläche des Gehäuses 3.

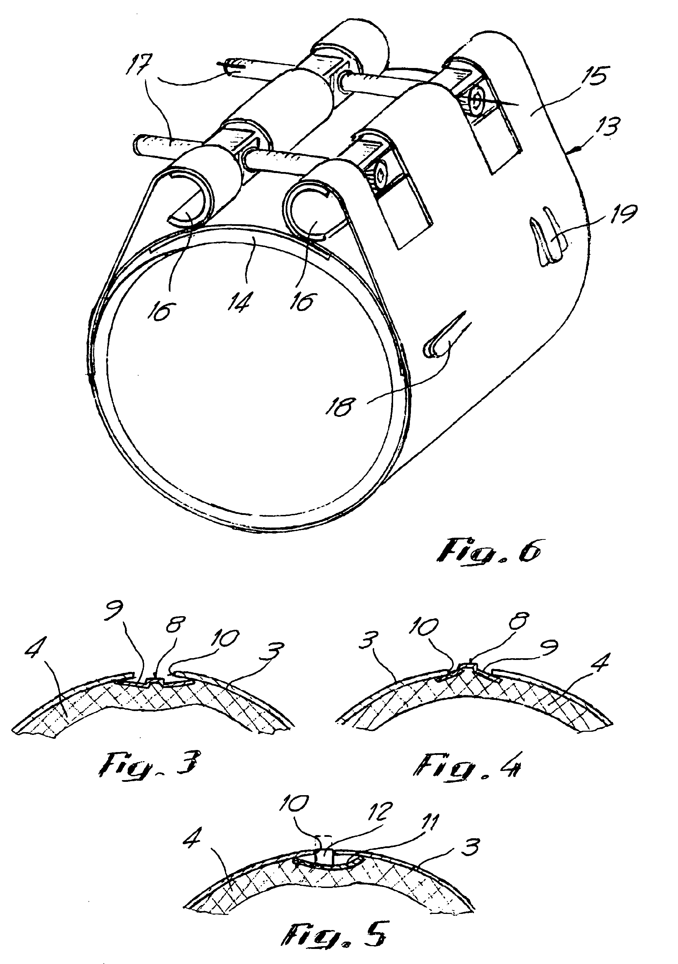

Die aus Fig. 6 ersichtliche Ausführungsform einer Rohrkupplung weist ein Gehäuse 13 mit Laschen 15 und einer im Gehäuse 13 angeordneten Dichtmanschette 14 auf. Die Verschlussbolzen 16 sind im Querschnitt U-förmig ausgebildet. Spannschrauben 17 durchqueren die Verschlussbolzen 16 und dienen zum Verspannen der Rohrkupplung. Am Gehäuse sind als federnde Finger 18, 19 ausgebildete Anzeigeelemente angeordnet. Der Finger 18 verläuft in Achsrichtung, der Finger 19 dagegen in Umfangsrichtung des Gehäuses 13. Die Finger 18, 19 können, wie gezeigt, mit dem Gehäuse einstückig ausgebildet oder als separate Teile hergestellt und mit dem Gehäuse 13, beispielsweise durch Punktschweissung, verbunden werden. Die Finger 18, 19 werden durch die Dichtmanschette 14 von innen her beaufschlagt und somit proportional zum Druck nach aussen verformt. Somit ist bei dieser Lösung der Verspannungszustand der Rohrkupplung von aussen ohne Hilfsmittel erkennbar.

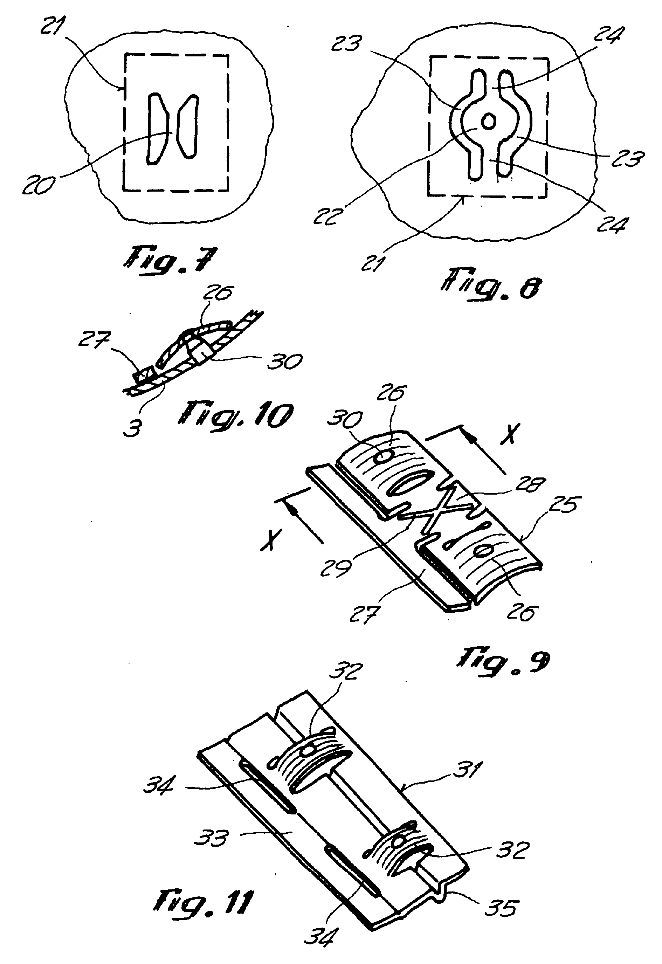

Das aus Fig. 7 ersichtliche Anzeigeelement ist als verformbarer Steg 20 ausgebildet. Der Steg 20 kann beispielsweise durch zwei Ausstanzungen hergestellt werden. Durch die Breite des Steges 20 kann dessen Verformungswiderstand und somit auch dessen Anzeigecharakteristik beeinflusst werden. Damit das Material der Dichtmanschette nicht durch die Ausstanzungen heraustreten kann, ist der Bereich des Steges 20 von der Innenseite her beispielsweise mittels einer Schutzfolie 21 abgedeckt.

Das in Fig. 8 dargestellte, im wesentlichen runde Anzeigeelement 22 wird durch zwei etwa nierenförmige Ausnehmungen 23 gebildet. Das Anzeigeelement ist über zwei verformbare Stege 24 mit dem übrigen Bauteil, bzw. Gehäuse verbunden. Die Ausnehmungen 23 werden ebenfalls durch eine Schutzfolie 21 abgedeckt.

Bei den aus Fig. 9 bis 11 ersichtlichen Anzeigeelementen 25 und 31 handelt es sich um Bauteile, welche separat hergestellt und anschliessend, beispielsweise durch Punktschweissen, mit einem Gehäuse verbunden werden. Somit können für beide Teile die dafür am besten geeigneten Werkstoffe verwendet werden.

Das aus Fig. 9 und 10 ersichtliche Anzeigeelement 25 weist an seinen beiden Endbereichen nach innen gewölbte Stege 26 auf. Eine Lasche 27 dient zum Verbinden des Anzeigeelementes 25 mit einem Gehäuse 3. Das Mittelteil 28 ist durch Sicken 29 verstärkt und somit praktisch nicht verformbar. Wenn ein bestimmter Druck auf die Stege 26 einwirkt, klappen diese um und wölben sich nach aussen. Dabei verschieben sich mit den Stegen 26 verbundene Stifte 30 radial nach aussen und überragen somit den Umfang des Gehäuses 3.

Das in Fig. 11 dargestellte Anzeigeelement 31 unterscheidet sich von der in Fig. 9 und 10 dargestellten Ausführungsform hauptsächlich durch die Breite der Stege 32. Eine Lasche 33 dient ebenfalls der Befestigung des Anzeigeelementes 31. Durch Längsschlitze 34 wird die Verformbarkeit der Stege 32 gewährleistet. Damit sich das Anzeigeelement 31 in dem den Stegen 32 benachbarten Bereich am Gehäuse abstützen kann und durch den Innendruck nicht verformt wird, ist über die ganze Länge des Anzeigeelementes eine Sikke 35 vorgesehen.

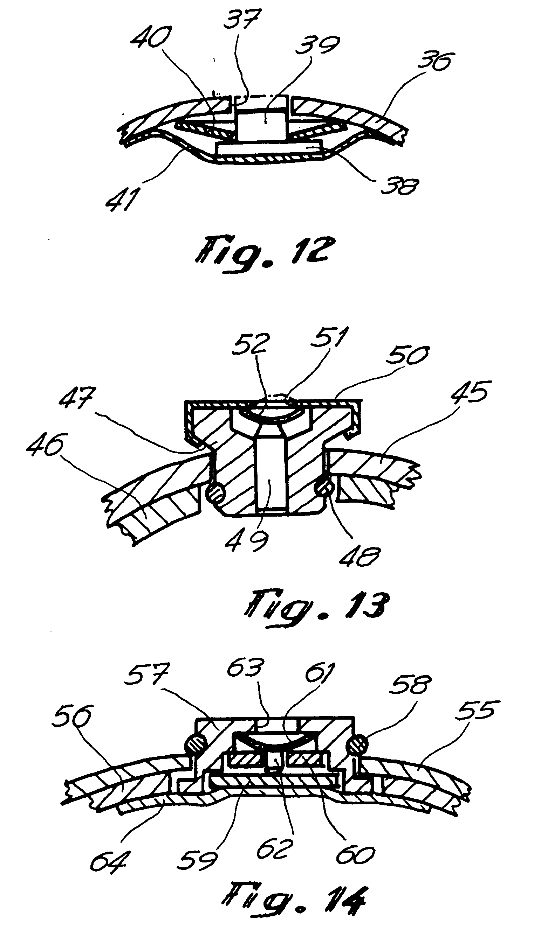

Das aus Fig. 12 ersichtliche Anzeigeelement entspricht funktionell etwa der in Fig. 5 gezeigten Lösung. Ein Gehäuse 36 weist eine Durchtrittsöffnung 37 auf. Ein vom Innendruck beaufschlagbarer, im Gehäuse 36 radial verschiebbarer Kolben 38 ist mit seinem Schaft 39 in der Durchtrittsöffnung 37 geführt. Der Kolben 38 wird durch eine Tellerfeder 40 im ungespannten Zustand der Vorrichtung in der gezeigten Ausgangsstellung gehalten. Wenn ein Innendruck auf den gegenüber dem Schaft im Durchmesser vergrösserten Kopf des Kolbens 38 wirkt, wird durch die entstehende Kraftkomponente die Tellerfeder 40 flachgedrückt. Das vordere Ende des Schaftes 39 gelangt somit in eine mit dem Umfang des Gehäuses 36 bündige oder vorspringende Lage. Der Kolben 38 und die Tellerfeder 40 werden durch eine elastische Schutzfolie 41 abgedeckt, welche den direkten Kontakt des Anzeigeelementes mit der elastischen Masse, bzw. der Dichtmanschette verhindert.

Die aus Fig. 13 ersichtliche Ausführung zeigt ein Gehäuse 45 mit einer Einlage 46. In einer Öffnung des Gehäuses 45 steckt ein Nippel 47. Der Nippel 47 ist mittels eines Sicherungsringes 48 am Gehäuse befestigt. Im Nippel 47 ist ein Bolzen 49 axial verschiebbar gelagert. Der Nippel 47 wird an seinem freien Ende mittels einer verrastbaren Abdeckkappe 50 abgeschlossen. Die Abdeckkappe weist eine Durchtrittsöffnung 51 auf. Der Bolzen 49 ist mit einer Federmembran 52 verbunden. Erreicht der auf die rückwärtige Stirnseite des Bolzens 49 wirkende Innendruck einen bestimmten Wert, so springt die Federmembran 52 in die strichpunktiert dargestellte, andere Endlage und überragt somit die Abdeckkappe 50.

Bei der in Fig. 14 dargestellten Ausführung ist ein Gehäuse 55 mit einer Einlage 56 ersichtlich. Eine Messdose 57 ist in eine Durchtrittsöffnung des Gehäuses 55 eingesetzt und mittels eines Sicherungsringes 58 gesichert. Die Messdose 57 enthält eine verformbare Messscheibe 59, welche vom Innendruck beaufschlagt wird. Die Verformung der Messscheibe 59 wird durch eine Anschlagscheibe 60 begrenzt. Eine Federmembran 61 ist mit einem Stift 62 verbunden, welcher seinerseits an der Messscheibe 59 abgestützt wird. Wenn die Messscheibe 59 um einen durch die Anschlagscheibe 60 begrenzten Weg verformt wird, springt die Federmembran 61 in ihre entgegengesetzte Stellung und wird dabei im Bereich der Durchtrittsöffnung 63 sichtbar. Die Messscheibe 59 wird durch eine Schutzfolie 64 abgedeckt.

### Bezugszeichenliste

- 1: Rohr
- 2: Rohr
- 3: Gehäuse
- 4: Dichtmanschette (Masse)
- 5: Lasche
- 6: Verschlussbolzen
- 7: Spannschraube
- 8: Anzeigeelement
- 9: Rand
- 10: Durchtrittsöffnung
- 11: Federmembran
- 12: Stift
- 13: Gehäuse
- 14: Dichtmanschette (Masse)
- 15: Lasche
- 16: Verschlussbolzen
- 17: Spannschraube
- 18: Finger
- 19: Finger
- 20: Steg
- 21: Schutzfolie
- 22: Anzeigeelement
- 23: Ausnehmung
- 24: Steg
- 25: Anzeigeelement
- 26: Steg
- 27: Lasche
- 28: Mittelteil
- 29: Sicke
- 30: Stift
- 31: Anzeigeelement
- 32: Steg
- 33: Lasche
- 34: Längsschlitz
- 35: Sicke
- 36: Gehäuse
- 37: Durchtrittsöffnung
- 38: Kolben
- 39: Schaft
- 40: Tellerfeder
- 41: Schutzfolie

- 45: Gehäuse
- 46: Einlage
- 47: Nippel
- 48: Sicherungsring
- 49: Bolzen
- 50: Abdeckkappe
- 51: Durchtrittsöffnung
- 52: Federmembran

- 55: Gehäuse
- 56: Einlage
- 57: Messdose
- 58: Sicherungsring
- 59: Messscheibe
- 60: Anschlagscheibe
- 61: Federmembran
- 62: Stift
- 63: Durchtrittsöffnung
- 64: Schutzfolie

## Patentansprüche

1. Vorrichtung zum Erzeugen von Druckkräften auf miteinander zu verbindende Bauteile, mit einem Gehäuse (3, 13, 36, 45, 55), einer mechanisch betätigbaren Spanneinrichtung, einer im Gehäuse (3,13, 36, 45, 55) angeordneten, elastischen Masse, die durch Krafteinwirkung der Spanneinrichtung gegenüber den zu verbindenden Bauteilen unter Druck setzbar ist, **dadurch gekennzeichnet, dass** das Gehäuse (3, 13, 36, 45, 55) oder die Masse (4, 14) einen mechanischen Indikator aufweist, der den Spannungszustand der Masse (4, 14) nach aussen anzeigt.

2. Vorrichtung nach Anspruch 1, **dadurch gekennzeichnet, dass** die Masse (4, 14) gummielastische Eigenschaften aufweist.

3. Vorrichtung nach Anspruch 1 oder 2, **dadurch gekennzeichnet, dass** das Gehäuse (3, 13, 36, 45, 55) wenigstens eine definierte Durchtrittsöffnung (10, 37, 51, 63) für die Masse (4, 14) aufweist.

4. Vorrichtung nach Anspruch 3, **dadurch gekennzeichnet, dass** im Bereich der Durchtrittsöffnung (10, 37, 51, 63) ein bewegliches Anzeigeelement (8, 18, 19, 20, 22, 25, 31, 38, 52, 61) vorgesehen ist.

5. Vorrichtung nach Anspruch 4, **dadurch gekennzeichnet, dass** das Anzeigeelement (8, 18, 19, 30, 39, 52, 61) als im wesentlichen konvexes, ggf. stiftförmiges, axial verschiebbares, bei Erreichen des vorgegebenen Spannungszustandes über die Mantelfläche des Gehäuses (3, 13, 36, 45, 55) hervortretendes, Element ausgebildet ist.

6. Vorrichtung nach Anspruch 4, **dadurch gekennzeichnet, dass** das Anzeigeelement als springende Federmembran (8, 11, 26, 32, 52, 61) mit zwei definierten Endzuständen ausgebildet ist.

7. Vorrichtung nach Anspruch 6, **dadurch gekennzeichnet, dass** das Anzeigeelement (8, 52, 61) etwa tellerförmig ausgebildet ist.

8. Vorrichtung nach einem der vorangehenden Ansprüche, **dadurch gekennzeichnet, dass** das Anzeigeelement als Tellerfeder (40) ausgebildet ist.

9. Vorrichtung nach einem der vorangehenden Ansprüche, **dadurch gekennzeichnet, dass** das Anzeigeelement als flache Messscheibe (59) ausgebildet ist.

10. Vorrichtung nach einem der vorangehenden Ansprüche, **dadurch gekennzeichnet, dass** das Anzeigeelement als federnder Finger (18, 19) oder Steg (20, 24, 26, 32) ausgebildet ist.

11. Vorrichtung nach Anspruch 10, **dadurch gekennzeichnet, dass** der Finger (18, 19) über einen elastischen Steg mit dem Gehäuse (3, 13) verbunden ist.

12. Vorrichtung nach einem der Ansprüche 10 oder 11, **dadurch gekennzeichnet, dass** der Finger (18, 19) mit dem Gehäuse (3, 13) einstückig verbunden und von der Masse (4,14) beaufschlagt ist.

13. Vorrichtung nach einem der vorangehenden Ansprüche, **dadurch gekennzeichnet, dass** das Anzeigeelement an seiner gegen die Masse (4) gerichteten Seite durch eine Schutzfolie (21, 41, 64) abgedeckt ist.

14. Vorrichtung nach einem der vorangehenden Ansprüche, **dadurch gekennzeichnet, dass** das Anzeigeelement als separate, auswechselbare Baueinheit (47, 57) ausgebildet ist.

15. Vorrichtung nach einem der vorangehenden Ansprüche, **dadurch gekennzeichnet, dass** die Vorrichtung als Rohrkupplung zum Verbinden glattendiger Rohre (1, 2) ausgebildet ist.

16. Vorrichtung nach Anspruch 11, **dadurch gekennzeichnet, dass** die Spanneinrichtung im wesentlichen aus zwei achsparallel angeordneten Verschlussbolzen (6, 16) und wenigstens einer, diese quer dazu durchsetzenden, Spannschraube (7, 17) besteht.

## Claims

1. Device for producing compressive forces on components to be connected to one another, comprising a housing (3, 13, 36, 45, 55), a mechanically actuatable clamping device, and an elastic mass which is arranged in the housing (3, 13, 36, 45, 55) and can be subjected to pressure by the action of force by the clamping device with respect to the components to be connected, **characterized in that** the housing (3, 13, 36, 45, 55) or the mass (4, 14) has a mechanical indicator which externally indicates the stress state of the mass (4, 14).

2. Device according to Claim 1, **characterized in that** the mass (4, 14) has rubber-elastic properties.

3. Device according to Claim 1 or 2, **characterized in that** the housing (3, 13, 36, 45, 55) has at least one defined passage (10, 37, 51, 63) for the mass (4, 14).

4. Device according to Claim 3, **characterized in that** a movable indicator element (8, 18, 19, 20, 22, 25, 31, 38, 52, 61) is provided in the region of the passage (10, 37, 51, 63).

5. Device according to Claim 4, **characterized in that** the indicator element (8, 18, 19, 30, 39, 52, 61) is in the form of a substantially convex, optionally pin-like, axially displaceable element which emerges via the lateral surface of the housing (3, 13, 36, 45, 55) on reaching the predetermined stress state.

6. Device according to Claim 4, **characterized in that** the indicator element is in the form of a springy membrane (8, 11, 26, 32, 52, 61) having two defined end states.

7. Device according to Claim 6, **characterized in that** the indicator element (8, 52, 61) is approximately dish-shaped.

8. Device according to any of the preceding Claims, **characterized in that** the indicator element is in the form of a cup spring (40).

9. Device according to any of the preceding Claims, **characterized in that** the indicator element is in the form of a flat measuring disc (59).

10. Device according to any of the preceding Claims, **characterized in that** the indicator element is in the form of a springy finger (18, 19) or web (20, 24, 26, 32).

11. Device according to Claim 10, **characterized in that** the finger (18, 19) is connected to the housing (3, 13) via an elastic web.

12. Device according to either of Claims 10 and 11, **characterized in that** the finger (18, 19) is connected integrally to the housing (3, 13) and is in contact with the mass (4, 14).

13. Device according to any of the preceding Claims, **characterized in that** the indicator element is covered by a protective foil (21, 41, 64) on its side facing the mass (4).

14. Device according to any of the preceding Claims, **characterized in that** the indicator element is in the form of a separate, replaceable structural unit (47, 57).

15. Device according to any of the preceding Claims, **characterized in that** the device is in the form of a pipe coupling for connecting pipes (1, 2) having smooth ends.

16. Device according to Claim 11, **characterized in that** the clamping device substantially comprises two closure bolts (6, 16) arranged parallel to the axis and at least one clamping screw (7, 17) passing transversely through these.

## Revendications

1. Dispositif pour produire des forces de pression aux composants à interconnectés, comprenant un boîtier (3, 13, 36, 45, 55), un dispositif de serrage à commande mécanique, une masse élastique logée dans le boîtier (3, 13, 36, 45, 55), qui peut être mis sous pression par rapport aux composants à connecter par une action de force du dispositif de serrage, **caractérisé en ce, que** le boîtier (3, 13, 36, 45, 55) ou la masse (4, 14) présente un indicateur mécanique, qui indique la condition de serrage de la masse (4, 14) à l'extérieur.

2. Dispositif selon la revendication 1, **caractérisé en ce, que** la masse (4, 14) a des propriétés gomme élastiques.

3. Dispositif selon la revendication 1 ou 2, **caractérisé en ce, que** le boîtier (3, 13, 36, 45, 55) comprend au moins une ouverture de passage définie (10, 37, 51, 63) pour la masse (4, 14).

4. Dispositif selon la revendication 3, **caractérisé en ce, qu'**un élément d'indication mobile (8, 18, 19, 20, 22, 25, 31, 38, 52, 61) est prévu dans la zone de l'ouverture de passage (10, 37, 51, 63).

5. Dispositif selon la revendication 4, **caractérisé en ce, que** l'élément d'indication mobile (8, 18, 19, 20, 22, 25, 31, 38, 52, 61) est formé comme élément sensiblement convexe, le cas échéant en forme de cheville, à déplacer axialement, qui fait saillie au delà de la nappe du boîtier (3, 13, 36, 45, 55) quand la condition donnée de serrage soit atteinte.

6. Dispositif selon la revendication 4, **caractérisé en ce, que** l'élément d'indication est formé comme une membrane sauteuse élastique (8, 11, 26, 32, 52, 61) ayant deux états terminaux définis.

7. Dispositif selon la revendication 6, **caractérisé en ce, que** l'élément d'indication (8, 52, 61) est réalisé à peu près en forme d'assiette.

8. Dispositif selon une quelconque des revendications précédentes, **caractérisé en ce, que** l'élément d'indication est formé comme une rondelle ressort (40).

9. Dispositif selon une quelconque des revendications précédentes, **caractérisé en ce, que** l'élément d'indication est formé comme une disque de mesure plate (59).

10. Dispositif selon une quelconque des revendications précédentes, **caractérisé en ce, que** l'élément d'indication est formé comme un doigt (18, 19) ou une entretoise (20, 24, 26, 32) élastique.

11. Dispositif selon la revendication 10, **caractérisé en ce, que** le doigt (18, 19) est relié au boîtier (3, 13) par une entretoise élastique.

12. Dispositif selon une quelconque des revendications 10 ou 11, **caractérisé en ce, que** le doigt (18, 19) est relié d'une seule partie au boîtier (3, 13) et est chargé par la masse (4, 14).

13. Dispositif selon une quelconque des revendications précédentes, **caractérisé en ce, que** l'élément d'indication est couvert à son côté dirigé vers la masse (4) par une feuille protectrice (21, 41, 64).

14. Dispositif selon une quelconque des revendications précédentes, **caractérisé en ce, que** l'élément d'indication est formé comme un composant séparé échangeable (47, 57).

15. Dispositif selon une quelconque des revendications précédentes, **caractérisé en ce, que** le dispositif est formé comme dispositif d'accouplement de tuyaux pour relier des tuyaux (1, 2) à bouts lisses.

16. Dispositif selon la revendication 11, **caractérisé en ce, que** le dispositif de serrage consiste sensiblement de deux bouchons de serrure (6, 16) disposés parallèlement à l'axe et au moins une vis de serrage (7, 17), qui les pénètre transversalement.
